# EUROPEAN PATENT APPLICATION

(11) **EP 1 085 757 A2**
(43) Date of publication of application: **21.03.2001**
(21) Application number: 00307842.5
(22) Date of filing: 11.09.2000
(51) Int. Cl.: H04N 7/16

(54) **A system and method of event delivery control, and a recording medium thereof**

(30) Priority: 16.09.1999 JP 26200399
(71) Applicant: Matsushita Electric Industrial Co., Ltd., Kadoma-shi, Osaka-fu, 571-8501 (JP)
(72) Inventor: Sekiguchi, Takuya, Osaka-fu (JP); Yoshii, Taketo, Hyogo-ken (JP); Tsujimura, Satoshi, Kobe-shi, Hyogo-ken (JP)
(74) Representative: Dempster, Benjamin John Naftel

(57) **Abstract**

The purpose of the invention is to provide an event delivery control system that can manage a task driving a window and a task without driving a window in centralized way, and reduce the operation that a user moves a pointer to the object window.

It is presupposed that an event delivery order storage stores at least one task ID specifying a task and at least one window ID specifying a window on an equality with each other (the task ID or the window ID is called an event delivery ID). When an event is generated, an event delivery processor requests an event delivery ID of the event destination, and then delivers the event to a task corresponding to the obtained event delivery ID. And an event destination manager receives an event delivery ID one after another from the event delivery order storage and sends the received event delivery ID to the event delivery processor.

## Description

This invention relates to an event delivery control system, and more specifically relates to an event delivery control system capable of executing equivalently the event delivery processing not only to a task driving a window but also to a task without driving a window.

As the digital technology and the terminal processing capability have improved greatly in recent years, the terminal apparatus gets to adopt the task control method for displaying multiple windows indicating independent information on a display screen, which is called the window control. The window control method is that multiple tasks generates multiple windows on a display screen when each task understands the display conditions each other, and it is far different from a conventional control method for determining all event processing by the task that controls the display conditions of the system.

Generally, the conventional analogue television performs instructions such as the channel selection and the volume adjusting by making a use of a remote controller. In this case, after receiving the instruction from the remote controller, a task carries out the processing. This is corresponding to the conventional task control method mentioned above. On the other hand, when a window is displayed in case of the personal computer, after moving the pointer into a specific position of a window and clicking the mouse button, the selected task corresponding to the window starts the processing. This is the window control method.

In case of adopting the window control method, a user must perform the following operations. When a display unit displays one or more windows, if an event must be delivered to a task corresponding to the specific window, the specific window must be in the active state (or selected by the pointer). Such operation is required in order to deliver an event to a task controlling the selected window, since there is a possibility that the displayed windows are generated (controlled) by the mutually independent tasks. Generally the method for activating a window in the personal computer is to move the pointer (or the cursor) into the specific position of the window and press down the enter key (or click the mouse button). In addition, in the digital television that will be put into practical use in feature, the determining method is to move the pointer into the command position by selecting one of arrow keys (the upward key, the downward key, the leftward key and the rightward key) provided on the remote controller, and then press the enter key on the remote controller.

Since the above-mentioned pointer operation is an additional operation to the usual key operation in the personal computer (it is the mouse operation), it becomes very troublesome when most of the input operations are performed by the key operation (for example, the operation for accounting processing). Therefore, the Japanese Laid-open Publication No. H05-011962 is disclosed the method that, on condition that the storage means registers a list of window identifiers corresponding to multiple windows respectively, whenever pressing the specific key, the pointer can move to a next window one after another in the predetermined order.

It is expected that the above digital television will adopt both a task driving a window and a task not driving a window together. The channel selection and the volume adjusting are the representative examples of a task without driving a window. The task of the volume adjusting displays on a display the gradations of the volume at receiving the event, but does not have a form of the gradations for adjusting the volume in advance. On the other hand, an example of a task with driving a window is a television program guide. The digital television will be able to display the program guide broadcasted as the data broadcasting. Until the program guide is displayed on the display, there is not any window or icon corresponding to the program guide on the display, though the remote controller is provided with an electric program guide (EPG) button. At the time of pressing the EPG button on the remote controller, the EPG task is activated, and the program guide (the window) is displayed (the task control). In case of browsing the program guide of the target channel at the target time, reserving a television program, or changing the channel according to the program guide, it is necessary for a user to place the pointer at a specific position of the program guide (the window control).

In this case, the task without moving the pointer, such as the channel selection and the volume adjusting, is directly executed by operating the remote controller in the way of the analogue television, which is the conventional task control. On the other hand, the task generating a new window by placing the pointer at the specific position of the program guide is executed by the conventional window control for controlling tasks by windows, which is adopted by the conventional personal computer.

By the way, in case of adopting both the task control and the window control, since it is necessary to manage and match those two control method; there is a defect that such management makes the configuration complicated. In addition, there is a task that changes to a task with driving the window, even though starting a task not driving the window. The necessity increases very much.

The purpose of the invention is to provide an event delivery control system that can manage a task with driving a window and a task without driving a window in a centralized manner, and also can reduce the operation volume when a user moves the pointer to the object window.

To achieve the above object the present invention adopts the following means.

An event delivery order storage 34 stores at least one task ID specifying a task and/or at least one window ID specifying a window on an equality with each other (a task ID or a window ID is called an event delivery ID), and when an event is generated, an event delivery processor 32 executes a request for an event delivery ID of the event destination and delivers the event to a task corresponding to the obtained event delivery ID. The request for the event delivery ID from the event delivery processor is delivered to an event destination manager 33. The event destination manager 33 obtains an event delivery ID one after another from the event delivery order storage 34, and then sends back the received event delivery ID to the event delivery processor 32.

Therefore, it is possible to manage not only an event delivered to an object task via window, but also an event delivered directly to a specific task without passing through the window, in centralized manner. There is no need to provide respective processing means for each case.

In the event delivery order storage 34, task identifiers and window identifiers are stored on an equality with each other. But the window identifiers can be stored separately in the window delivery order storage 341 (341a and 341b), that is to say, an identifier corresponding to the window delivery order storage 341 can be substituted for the window identifier in the event delivery order storage. In this case, the identifier corresponding to the window delivery order storage 341 is arranged on an equality with a task ID in the event delivery order storage 34.

The window delivery order storage 341 may manage the event delivery orders according to the positions of windows, or the preparation orders of windows. And the event delivery order may be managed by the priority orders given to plural windows, or by the activation orders of each task preparing the window.

The arrangement orders of identifiers in the event delivery order storage 34 may be fixed, but can be configured to be changeable dynamically according to the operating conditions. In this case, since the event identifiers according to the present conditions are arranged on the event delivery order storage (the window delivery order storage) in the order of high frequency in use, it results that the response speed gets shorten at the time of pressing the key of the remote controller.

An event receiver 41 provided on the task side receives each event delivered to a task side by the above processing. The event receiver 41 can be configured only to receive and send back the delivered event, even when the delivered event is consumed or not. And moreover it is configured that the event receiver can include a function of returning the event to the event delivery processor 32 adding with information of the consumption state, and also the event delivery processor can perform the processing corresponding to the information. For example, if the "consumption" is returned, the event delivery processor 32 waits a next event. And if the "non-consumption" or "consumption and continuation" is returned, the event delivery processor 32 executes a processing of a request for a next destination.
FIG. 1 is a block diagram showing a basic construction of the present invention.
FIG. 2 is a diagram showing an example of the event delivery order storage.
FIG. 3 is a diagram showing another example of the event delivery storage.
FIG. 4 is a flowchart showing the processing sequence of the present invention.
FIG. 5 is a flowchart showing the processing sequence of the present invention.
FIG. 6 is a block diagram showing the other basic constructions of the present invention.
FIG. 7 is a diagram showing a state displayed by the display means utilized by the invention.
FIG. 8 is a conceptual diagram showing an operating state of the invention.
FIG. 9 is a conceptual diagram showing an operating state of the invention.
FIG.10 is a conceptual diagram showing an operating state of the invention.
FIG.11 is a conceptual diagram showing examples displayed in the present invention.

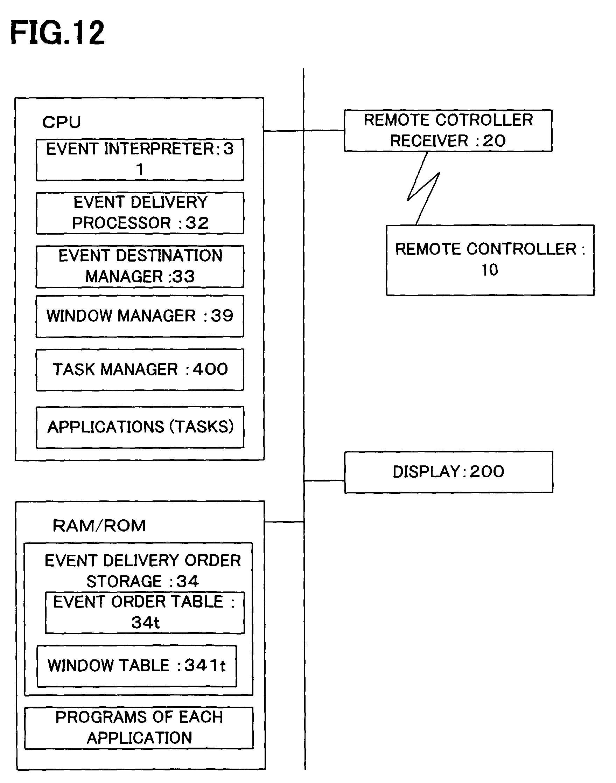

FIG.12 is a system diagram of the present invention.

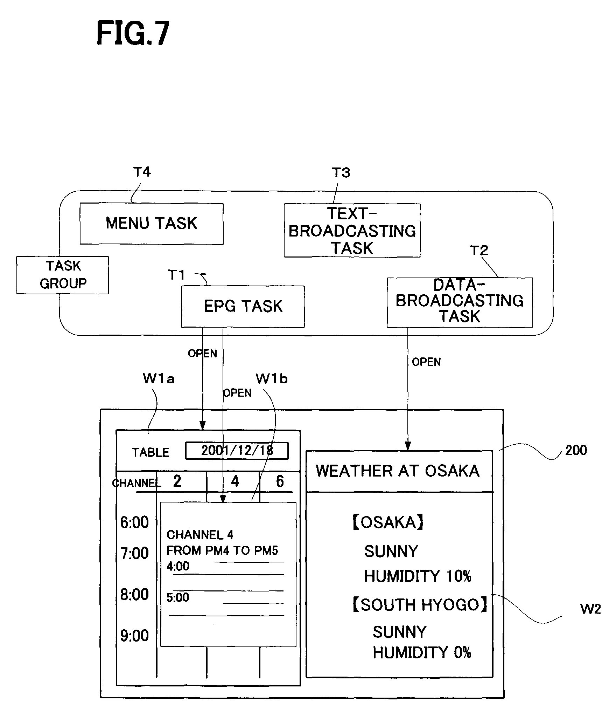

FIG. 7 shows an example indicating the relationship between a task and a window, and the relationship between a remote controller and each button, those of which will be utilized by the digital television system.

When a data-broadcasting button of the remote controller is pressed down, a data-broadcasting task T2 is activated. At this time, a data-displaying window W2 is displayed, which includes a data such as the weather report obtained from the specific data source. In this condition, the form feed processing can be performed by pressing a roll-up button or a roll-down button.

That is to say, until the data-displaying window W2 is displayed, an event is directly delivered to the data broadcasting task T2 and the specific processing runs. On the other hand, after displaying the data-displaying window W2, the necessary event corresponding to the window, such as the pointer position on the window, is delivered to the data-broadcasting task T2 via the data-displaying window W2.

In addition, an electronic program guide (EPG) task T1 starts the processing by pressing an electronic program guide button (EPG button), and displays an EPG window W1a indicating simple information including channels, time, and a title of a program. At this time, the pointer is moved to a field of a target time of a target channel by pressing either one of arrow keys (an upward arrow button, a downward arrow button, a leftward arrow button or a rightward arrow button), and then the enter key is pressed down. Thereby, an electronic program guide full-information window (EPG full-information window) W1b appears and indicates the more detailed information of the television program guide within the window. Accordingly, in this case, like the above-mentioned case, until the EPG window W1a is displayed, the event is directly delivered to the EPG task T1. On the other hand, after the displaying of the EPG window W1a, the event is delivered to the EPG task T1 via the window W1a.

**[TABLE 1]**

| Task or Window | Event (Receivable button) | Remarks |
|---|---|---|
| EPG full-information window | Disappeared by "cancel" | The entity is the EPG task. |
| EPG window | Move the pointer by one of arrow keys, and display EPG full-information by the "enter" key. | The entity is the EPG task. |
| Data displaying window | Activate/terminate by "roll-up" or "roll-down" | The entity is the data-broadcasting task. |
| EPG task | Activate/terminate by "EPG". Prepare the EPG window at the activating | |
| Data-broadcasting task | Activate/terminate by "data- broadcasting". Prepare the data-displaying window at the activating. | |
| Text-broadcasting task | Activate/terminate by "text". Prepare the text-broadcasting window at the activating. | The Text-broadcasting window isn't illustrated in the drawing. |
| Menu task | Activate/terminate by "menu". Prepare the menu window at the activating. | The menu window isn't illustrated in the drawing. |

The Table 1 described above is a corresponding table of the event that a window or a task can received and the button on the remote controller that executes said event, which summarizes the contents described above. But the contents of the Table 1 are described as examples and are not restricted to this.

In a system including both the processing for delivering an event to a task via a window as described above and the processing for delivering an event to a task directly, the present invention can manage said both processing in the centralized manner.

### [EMBODIMENT 1]

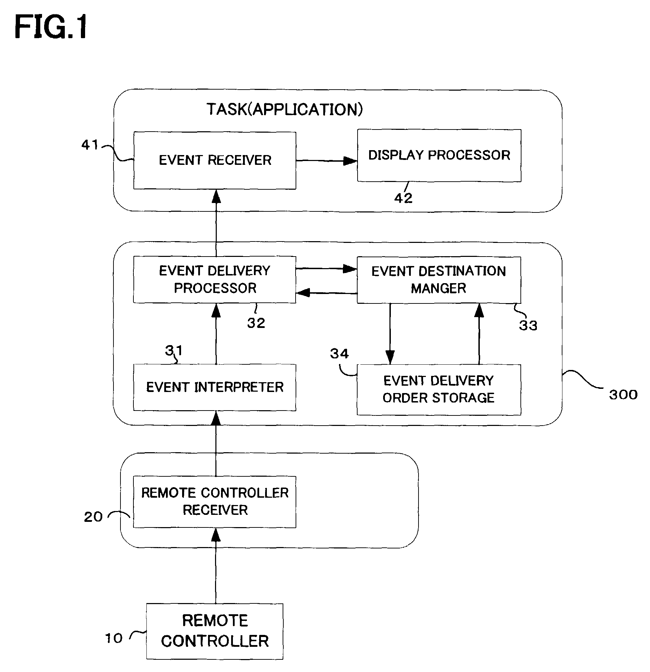

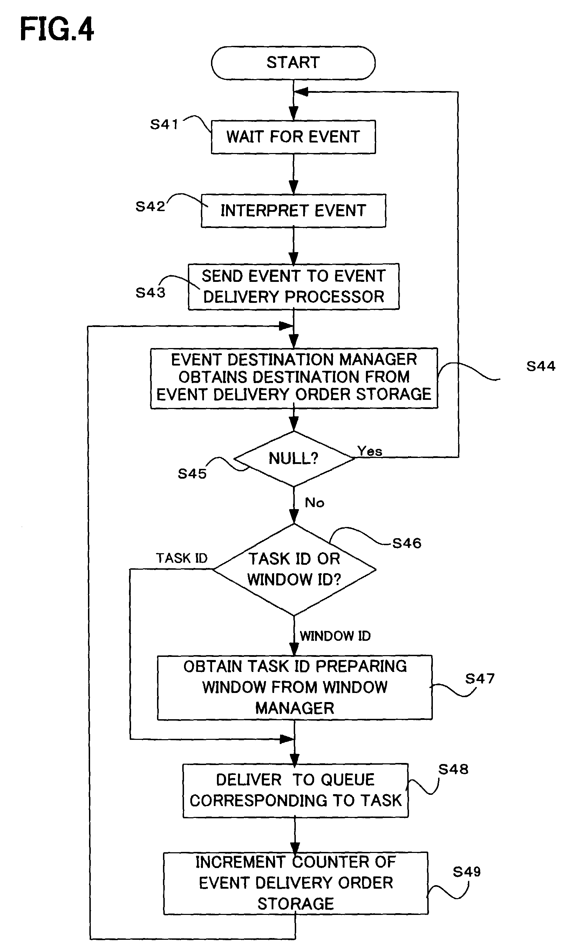

FIG.1 is a conceptual diagram of the first embodiment of the invention. FIG.4 is a flowchart showing the operating sequence of the embodiment.

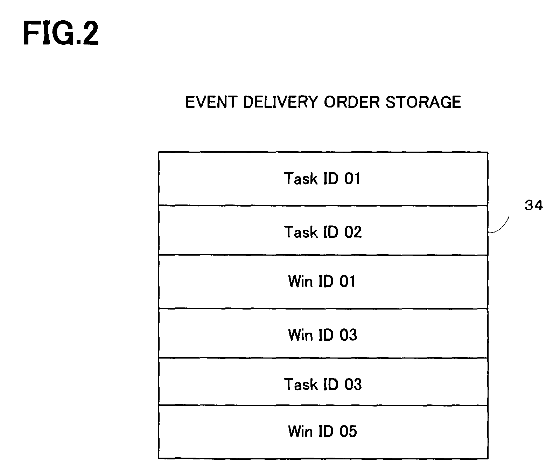

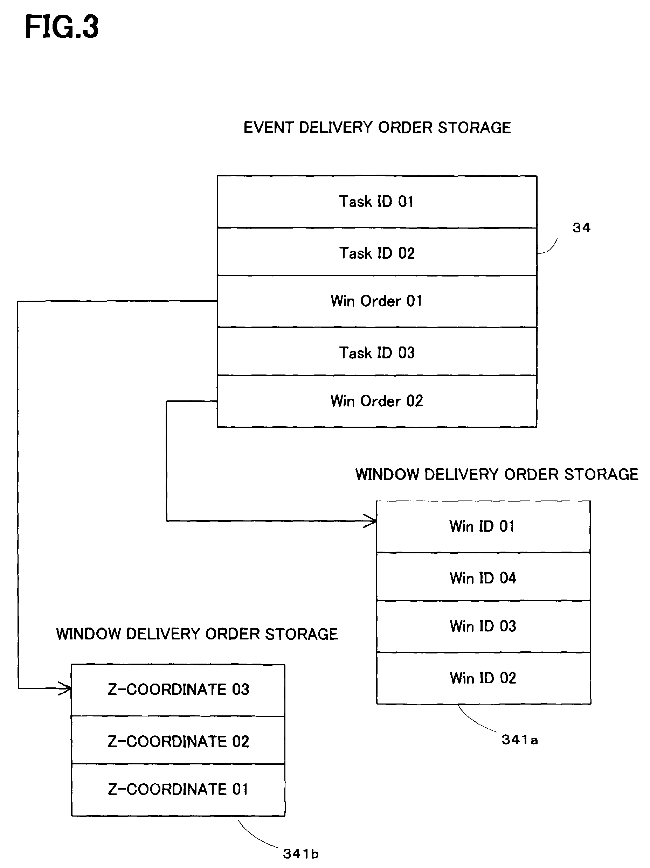

Fist, when a specific button of the remote controller 10 is pressed down, a remote controller signal is sent out including the instruction contents corresponding to the button. The remote controller signal is received by a remote controller receiver 20, and then converted to an event corresponding to the specific button. The event is inputted to an event interpreter 31 of event delivery means 300. After the event interpreter judges the type of event, the event is transferred to an event delivery processor 32 (FIG.4, Step S41 to S43). The event delivery processor 32, at the time of receiving the event, sends a request for an event destination to an event destination manager 33. The event destination manager 33 receiving said request obtains the top ID of window identifiers and/or task identifiers stored in an event delivery order storage 34, as shown in FIG. 2 and FIG.3, (FIG.4, Step S44). The event delivery order storage 34 is practically a storage unit such as a memory or a hard disk. And the explanation referring to FIG.2 and FIG.3 will be separately described in detail.

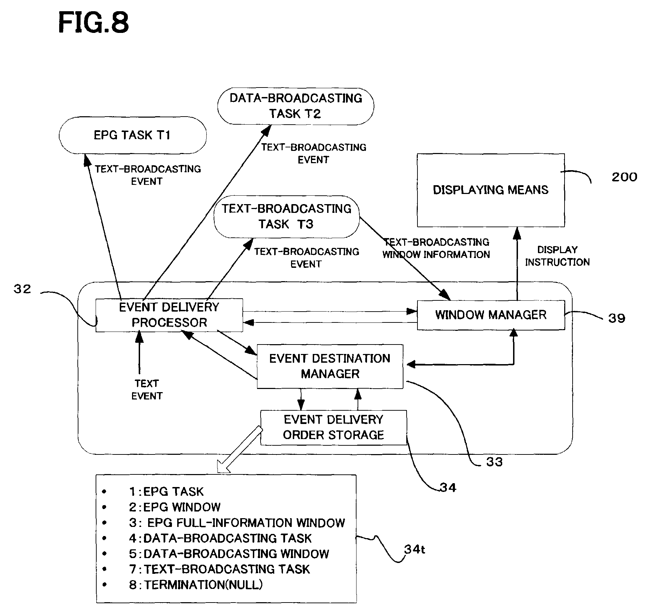

The event destination manager 33 notifies the event delivery processor 32 of the obtained ID. The event delivery processor 32 judges whether the received ID is a window ID or a task ID, if it is the window ID, inquires and requests a task ID controlling the window ID to a window manager 39 (see FIG.8) (FIG.4, Step S46 to S47). The explanation about said window manager 39 will be made later. According to the window ID or the task ID thus obtained, the event delivery processor 32 can confirm which task the event sent from the event interpreter 31 should be delivered to, so that the event can be delivered to an event receiver 41 of the task to be delivered (FIG.4, Step S48).

The configuration of the event receiver 41 can be configured in various. It may be arranged that, for example, each queue be provided on the memory so as to be corresponding to a task respectively, thereby the event is delivered to the queue.

Since each event receiver 41 of respective task is provided with a mask capable of receiving a specific ID only, if the task of the event receiver 41 can receive the delivered event, the event receiver 41 starts the task processing corresponding to the event (including the task corresponding to the window), and then if necessary, the display processor 42 can perform the display. Some examples in Table 1 indicate when a specific task can receive a specific event. But the embodiments are determined by the various conditions, so that these are not restricted to the described embodiments.

When the event delivery processor 32 delivers an event sent from the event interpreter 31 to the task corresponding to the top of task ID stored in the event delivery order storage 34, a counter of the event delivery order storage 34 is incremented (FIG.4, Step S49). And next, the event delivery processor 32 sends another request for an event destination to the event destination manager 33, the second ID in the event delivery order storage 34 is given to the event delivery processor 32 (the second ID is an identifier placed on the order corresponding to the value indicated by the counter). According to the second ID, the event that is held by the event delivery processor 32 is delivered to the target task, and in succeeding the processing for the third ID is executed. When the termination state can be detected (the above counter has counted up the last order and the state turned to Null) as shown in FIG.8, the event delivery processor 32 completes the processing and waits for the generation of next event (FIG.4, Step S45: Yes).

In the above description, the event delivery processor 32 judges whether the received ID is a window ID or a task ID, and if it is a window ID, inquires and requests a corresponding task ID to the window manager 39 (FIG.4, Step S46 to S47). But it may be arranged that the delivery destination manager 33 execute this procedure, while the event delivery processor 32 execute the delivery only. The event delivery means is provided with the window manager 39 separately so as be easy to understand the configuration, but the event delivery manager 33 may execute the processing of the window manager 39 including the following processing. And the step of incrementing the counter (Step S49) has an object to extract the contents of the event delivery order storage exactly, and can be positioned next to the step of obtaining a destination of the event destination manager 33.

FIG.2 shows an example of the storing state of windows or tasks in the event delivery order storage 34. The task identifiers (TaskID01, ID02, ID03) and the window identifiers (WinID01, ID03, ID05) are stored in a line.

The storing state is considered as both a static condition and a dynamic condition as discussed later. The static condition is defined as the configuration that the stored order is fixed, while the dynamic condition is defined as the configuration that, when a task is activated or a window is generated, the activated task or the generated window is stored at the top position, and the registered tasks and windows are subordinated to the latest task or window.

In this case, the event delivery order storage 34 may be configured according to the preparation order of window or the activation order of task driving the window. In addition, the event delivery order storage 34 may be configured according the priority order that has been given to tasks and windows. Moreover, the arrangement order of window identifiers or task identifiers can be changed, added, inserted, or deleted according to the conditions.

FIG. 3 shows the other embodiment of the event delivery order storage 34. In the event delivery order storage 34, the task identifiers (TaskID01, ID02, ID03) are stored in the same way as in FIG.2, but the window identifiers are replaced with window order identifiers (Window Order 1 or Window Order 2) for specifying the window delivery order storage 341 (341a, 341b). The window delivery order storage 341a or 341b stores the window identifiers. According to such arrangement, the window identifiers of a same group, that is, said window identifiers included in one task, can be stored all together in a window delivery order storage 341a. And as shown in the window delivery order storage 341b, the positions of the windows has been registered instead of the window ID, therefore the priority order can be determined according to the registered positions. The window position is defined as a point represented by coordinate values. For example, an original point is set at the upper-left-end of the display, and the downward direction is defined as a X-axis, and the right direction is defined as a Y-axis, and the coming direction is defined as a Z-axis (the Z-axis is a virtual axis). The window that having the maximum value of the Z-coordinate (that is, the window is displayed at the front position in virtual) is positioned at the top of the window delivery order storage 341b, thereby the window can be given the priority. Any case described above can adopt either the above static method or the above dynamic method.

To explain the invention, FIG.3 shows two window delivery order storages 341a and 341b. The former is managed according to the window identifiers, and the latter is managed according to the window positions. The number of the window delivery order storage 341 can be changed if necessary. As described above, the window delivery order storage can be managed either by the same kind category (the managing method by the window position), or by the various categories, according to the conditions.

### [EMBODIMENT 2]

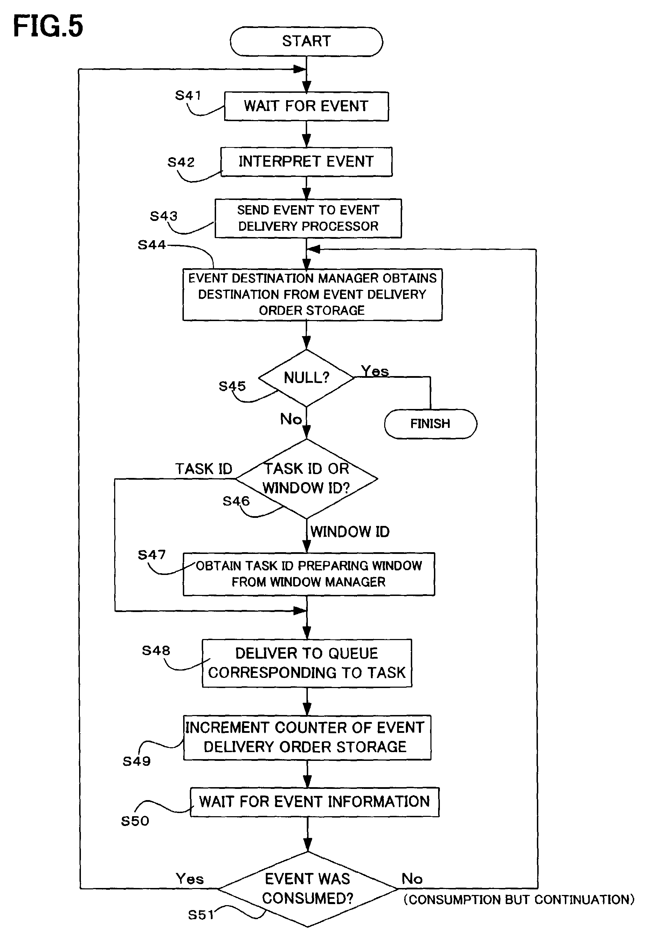

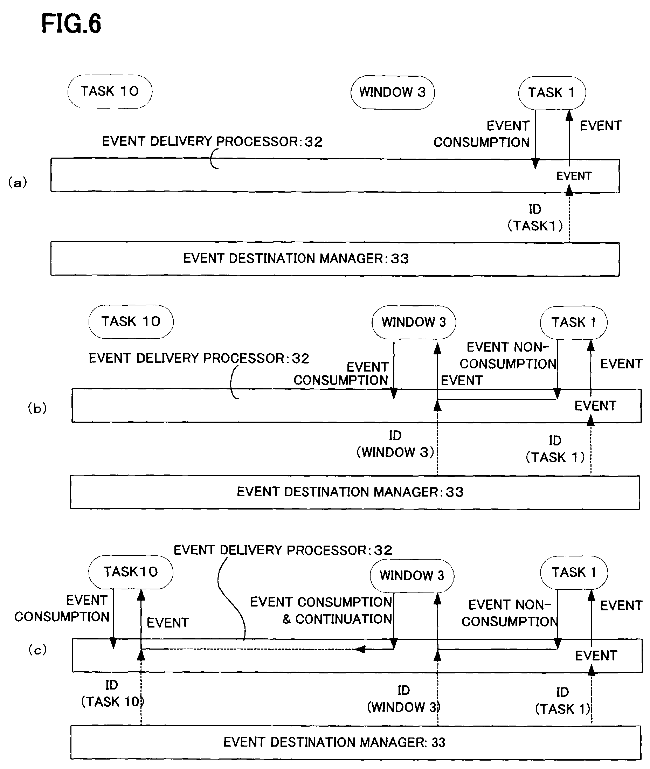

FIG.5 is a flowchart showing another embodiment of the case that the event receiver 41 processes the task ID, and FIG.6 is a conceptual diagram thereof. The arrangement order of tasks and windows heading from the right to the left is equivalent to the arrangement order heading from the top to the bottom in the event delivery order storage 34.

In this embodiment, the event receiver 41 of each task has a function of sending back information of the consumption conditions of the event to the event delivery processor 32, which will be described later, in addition to the receipt of the event from the event delivery processor 32. The event "consumption" means that a task corresponding to an event performs a purposeful processing.

In the above configuration, the process up to the delivery of the event to the event receiver 41 of a task side according to the task ID (the window ID) received first (FIG.5, Step S41 to S49) is the same as in FIG.4, of which the explanation will not be described here.

As described above, the event delivery processor 32 delivers the event to the event receiver 41 of the specific task corresponding to said ID, and waits for the return whether the event is consumed or not (FIG.5, Step S50). After receiving the event, the event receiver 41 determines whether the task can accept the delivered event or not, and if it is possible, sends back the event to the event delivery processor 32 together with information "consumption" that the event was consumed. When receiving the "consumption", the event delivery processor 32 discards the event and waits for the next event (FIG.5, Step S51 toS41) (See FIG.6 (a)).

If the event receiver 41 determines that the received event cannot be accepted by the task, the event receiver 41 sends back the event to the event delivery processor 32 together with information "non-consumption" that the event was not consumed. And the event delivery processor 32, which receives the returned event, sends a request for another destination to the event destination manager 33 (FIG.5, Step S51 to S44). In response to the request, the event destination manager 33 obtains the next task ID or window ID according to the arrangement order in the event delivery order storage 34, and then gives it to the event delivery processor 32. The event delivery processor 32 delivers the event to the next task corresponding to the obtained ID. Until the event is accepted by the task, the event delivery processing will be continued repeatedly. When the task accepts the event, the information "consumption" is sent to the event delivery processor 32 together with the event, as described above. And the event delivery processor 32 waits for the occurrence of the event (FIG.5, Step S51 to S41) (See FIG.6 (b)).

The information returned from the event receiver 41 are defined as the "consumption" and "non-consumption" in the above description, but the information is not restricted to the two examples. If necessary, the other information can be returned. For instance, if returning the "consumption and continuation" that the event should be delivered to the next destination although consumed, the judgment whether the event is consumed or not as shown in FIG.5 results in "NO", accordingly the step turns to the processing of obtaining the next destination (FIG.5, Step S51 to S44) (See FIG.6, (c)). Specifically, there is the following procedure: After the EPG full-information window is generated, if said window is left alone for a specific time, a task of the screen saver is activated. While the screen saver is running, if upward arrow key is pressed down, the screen saver task releases the screen saver in response to the event of the upward arrow key, at the same time an EPG (Electric Program Guide) task performs the form feed in the upper direction according to the same event of the upward arrow key.

When the "consumption and continuation" explained in FIG.6 (c) is sent back, the next destination of the event might be a window (task) that would consume the event or a task (window) that has already sent back the "non-consumption", that is, the next destination should be positioned at the top of the arrangement orders in the event delivery order storage 34 (at the right of FIG.6). Therefore, the delivery orders of identifiers in the event delivery order storage 34, if possible, should be changed so as to position an identifier corresponding to a next task (a window) that should consume the event at a lower order than an identifier corresponding to a task (a window) that has sent back the "consumption and continuation". Otherwise, in case that the order of the arranged identifiers is fixed, it may be arranged that the event should be delivered one after another up to a task corresponding to the last ID of the arrangement order of the event delivery order storage 34, and then the event delivery should be continued from the top of the arrangement order until the event is consumed.

According to the configuration described above, it is possible to omit unnecessary actions; for example, that a specific event delivered from the remote controller activates the event delivery processor 32 even though the event has already been consumed.

### [EMBODIMENT 3]

FIG.8 shows a specific operating state in detail in case of using the event delivery order storage 34 shown in FIG.2.

In FIG.8, after activating a specific task, when the task sends to a window manager 39 a window preparing request together with information necessary for preparing the window displayed by the task (the information of the position, the height, the width, the color, and etc.), the window manager 39 can display the window by obtaining necessary resource based on the information.

In this embodiment, the task identifiers and the window identifiers presuppose to be arranged rigidly in the following order, an EPG task, an EPG window, an EPG full-information window, a data-broadcasting task, a data-broadcasting window, a text-broadcasting task... for example, in an event order table 34t of the event delivery order storage 34. And when a user presses a text button of the remote controller 10, in response to the request from the event delivery processor 32, the event destination manager 33 obtains an ID of the EPG task T1 from the event order table 34t of the event delivery order storage 34, and then sends it to the event delivery processor 32. And according to the ID of the EPG task T1, the event delivery processor 32 delivers the event corresponding to the text button to a queue of the EPG task T1 (FIG.4 and FIG.5, Step S48). At this time, the EPG task T1, since being activated or terminated by the event corresponding to the EPG button of the remote controller as shown in FIG.7, doesn't start the processing even though the event corresponding to the text button has been sent.

In a flowchart shown in FIG.4, even if the delivered event is accepted by the specific task or not, the event delivery processor 32 can send a request for a next delivery ID to the event destination manager 33 to obtain a next destination. In a flowchart shown in FIG.5, when the delivered event is not accepted by the specific task, the event delivery processor 32 can send a request for next event delivery ID to the event destination manager 33 to obtain a next destination.

Accordingly, it is configured in either FIG. 4 or FIG.5 that the event delivery processor 32 sends a request for a next ID to the event destination manager 33 and the event destination manager 33 obtains an ID corresponding to an EPG window W1a positioned at the second order of the event order table 34t and gives it to the event delivery processor 32. The event delivery processor 32 recognizes that the ID is corresponding to the window, and inquires of the window manager 39 the corresponding task. And after the window manager 39 notifies the event delivery processor 32, according to the ID information under the control by itself, that the task corresponding to the EPG window W1a is the EPG task T1 (FIG.4 and FIG.5, Step S46 to S47), the event corresponding to the text button is delivered to the queue corresponding to the EGP task T1. At this time, since the EPG task T1 does not need the event, it will not be activated, too. The term "under the control by itself" indicates that, when the window manager 39 prepares a new window based on the instruction of a specific task, the window manager 39 gives the new window a corresponding ID and stores in a specified memory the task ID instructing to prepare the new window together with information necessary for the preparation of the window, and moreover, sends out the information of the task controlling the inquired window in response to the inquiry from the event delivery processor 32. The necessary information is a task ID (an ID of the EPG task T1), a relative position (x, y) to the parent window, a width of the window, a height of the window, and etc., for example.

The process, as shown in FIG.4 and FIG.5, that the event corresponding to the text button is delivered to each task corresponding to an ID arranged in the event order table 34t, is repeated one after another. And when the event destination manager 33 obtains the text-broadcasting task ID of the event order table 34t, the event delivery processor 32 delivers to a text-broadcasting task T3 the event corresponding to the text button. Thereby, the event is accepted by the text-broadcasting task T3, which starts the processing.

As shown in the flowchart of FIG.4, even if the event is consumed by the text-broadcasting task T3, the event delivery processor 32 repeats a step of obtaining an ID one after another until the last of the event order table 34t. And as shown in the flowchart of FIG.5, at receiving the "consumption" from the event receiver 41, that is, when the text-broadcasting task T3 has consumed the event, the event delivery processor turns to a state of waiting a next event (FIG.5, Step S41). On the other hand, at receiving the "consumption and continuation" from event receiver 41, even when the text-broadcasting task T3 has consumed the event, the event delivery processor 32 delivers the same event to a next destination obtained one after anther from the event destination manager 33 until receiving the "consumption" from the event receiver 41.

After receiving the event corresponding to the text button as above, the text-broadcasting task T3 starts the processing, that is, notifies the window manager 39 of the necessary information for the preparation of a text-broadcasting window W3. Thereby the window manager 39 prepares the text-broadcasting window W3 on the display means 200.

As discussed above, since the invention can execute uniformly the processing of delivering an event to a task linking with a button of the remote controller (an application) and to a window, it is possible to manage and fit plural controlling operations. Therefore, it is possible to facilitate the event control.

And when the event inputted from the remote controller by a user is corresponding to only a specific window (task), since the event is automatically delivered to the task in which the event is to be consumed, there is no need of the operation of moving the pointer. Therefore, it is possible to reduce the operation of a user.

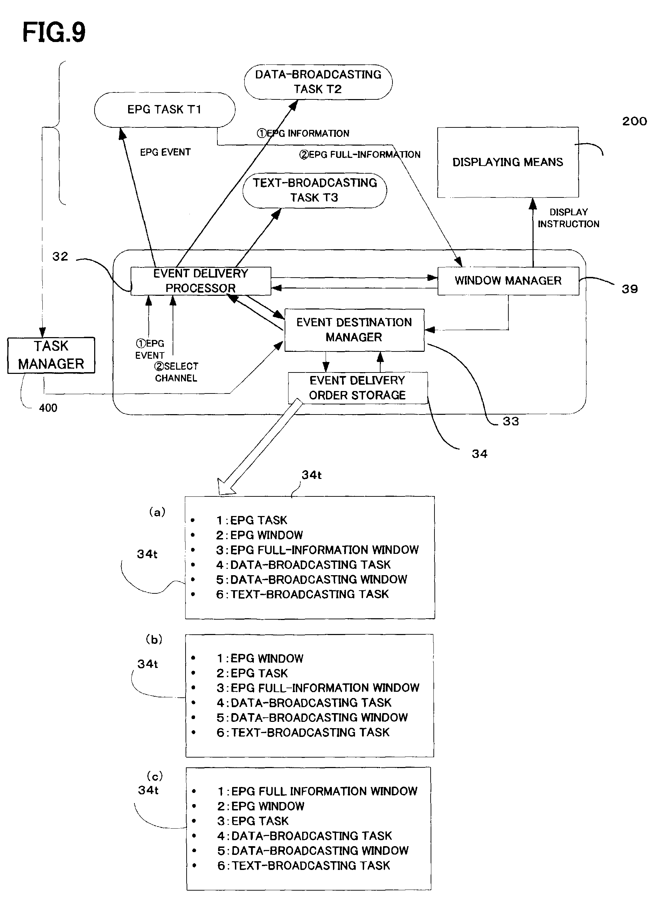

FIG.9 shows a conceptual diagram when the event order table changes dynamically. In FIG.9, the event destination manager is provided so as to change the arrangement order of each ID of the event order table 34t according to the operating state at present time.

When the ID of EPG task T1 is positioned at the top of the event order table 34t (FIG.9 (a)), if the EPG button of the remote controller 10 is pressed down, the event destination manger 33 first obtains the ID of EPG task and the event delivery processor 32 delivers the event to the EPG task T1. Thereby, by activating the EPG task T1, the EPG task T1 gives the necessary information for the preparation of the EPG window W1a to the window manager 39. The window manager 39 keeps the information under the control by itself, at the same time, according to the information displays the EPG window W1a on the display means 200 (See FIG.7).

Next, the window manager 39 sends to the event destination manager 33 the notice that the EPG window W1a is being displayed, together with the ID of the EPG window W1a. Accordingly, the event destination manager 33 changes from the event order table 34t (FIG.9 (a) of the event delivery order storage 34 to the event order table 34t (FIG.9 (b)) at the top of which the ID of the EPG window W1a is positioned. The EPG window W1a consists of divided fields that a user can select, for example, such a unit of each program and a unit of time table like the TV-radio programs in newspapers. When a user moves the pointer to a specific time of a desired specific channel within the selectable fields by using arrow keys, and then presses the enter key. By pressing the enter key, the event delivery processor 32 obtains the ID of the EPG window W1a arranged at the top of the event order table 34t, and delivers the event of the enter key to the EPG task T1 via the EPG window W1a.

Specifically, according to the step judging whether it is a task ID or a window ID (FIG.4 and FIG.5, Step S46), when it determines the window ID, the event delivery processor 32 obtains an ID of the EPG task T1 corresponding to the window ID from the window manager 39, and then delivers the event of the enter key to the EPG task T1 (FIG.4 and FIG.5, Step S46 to S47 to S48).

Therefore, the EPG task T1 notifies the window manager 39 of the information of the EPG full-information window, and the window manager 39 displays the EPG full-information window W1b on the EPG window W1a (See FIG.7). The EPG full-information window W1b is positioned at the top of the event order table 34t (FIG.9 (c)).

As described above, the event destination manager 33 arranges the window ID on the event order table 34t of the event delivery order storage 34 based on the information of the window manager 39. In case of activating the data-broadcasting task T2, however, the event destination manager 33 arranges the ID of the data-broadcasting task T2 at the top of the event order table 34t based on the information of the task manager 400. The "information" indicates the running state of the task, and the waiting state of the event, the contents of which can determine to change the arrangement order in the event order table 34t. Specifically, the task manager 400, referring to the information in the kernel, when the task is activated, notifies the event destination manager 33 of the information of the activation. And the event destination manager 33 sets the event order table 34t according to the notified information. It is not always necessary to provide the task manager 400. The arrangement of each ID in the event order table 34t can be set by directly requesting the event destination manager 33 to set (change, add to, and etc.) the event order table 34t without intervening the task manager 400 after activating each task (the EPG task T1, etc.). And the event destination manager 33 may execute the processing that the task manger 400 performs.

As described above, it is also possible to facilitate the event control by changing the event order table dynamically. And when the event that a user inputs by the remote controller is corresponding only to a specific task (window), since the event is automatically delivered to the task to be executed, the operation of moving the pointer is made redundant. Therefore it is possible to reduce the user's load.

On the other hand, when the event inputted by a user can be executed by plural tasks, that is, when plural windows that can accept the same event are displayed, the user must move the pointer to the object window, or press the task button (the EPG task, the data-broadcasting task, and etc.). Thereby the order of the event ID in the event delivery order storage 34 can be changed, and it is possible to deliver the event to the object task. But in the invention, since the event order table is changed dynamically, it is not always necessary to move the pointer when the sequential operations are performed.

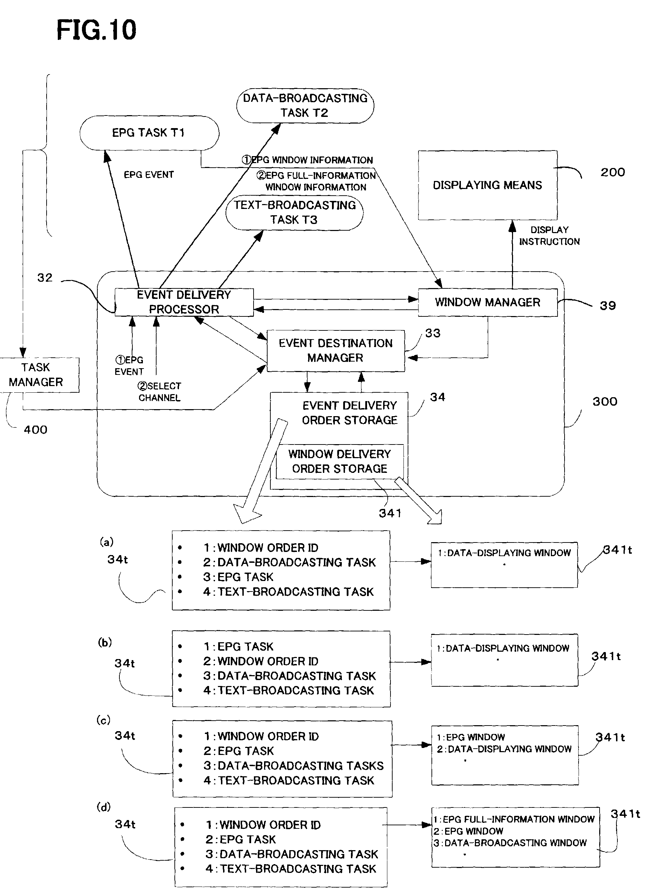

FIG.10 shows an embodiment using the event delivery order storage 34 shown in FIG.3, for registering in the event order table 34t task ID and window order ID for specifying the window delivery order storage 341.

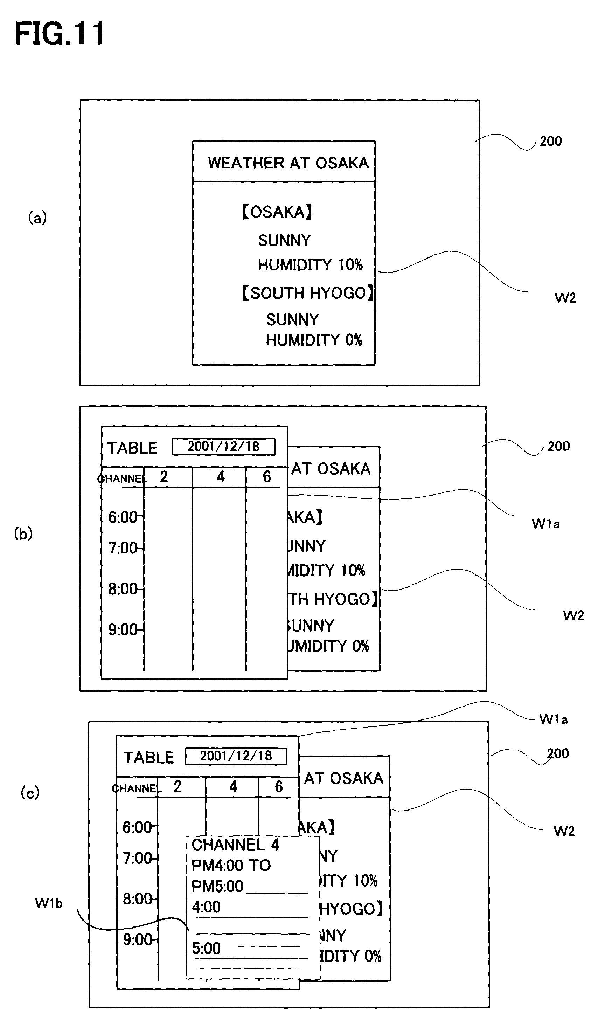

The initial state presupposes as shown in FIG.11 (a) that the displaying means 200 displays the weather report (the data-broadcasting) and the window order ID is arranged at the top of the event order table 34t. And it also presupposes that the window delivery order storage 341 which is related with the window order ID prepares the window order table 341t positioning the ID corresponding to the data-displaying window W2 at the top of its table.

The above-mentioned state is formed by pressing the data-broadcasting button. Specifically, when the data-broadcasting button is pressed down, the data-broadcasting task T2 is positioned at the top of the event order table 34t according to the instruction of the data-broadcasting task T2 which has received the event, the instruction of the other task, or the instruction of the pre-set system. And after the data-broadcasting task T2 starts the processing, the window manager 39 prepares the data-displaying window W2 based on the instruction of the data-broadcasting task T2. While the information about the preparation of the data-displaying window W2 is notified from the window manager 39 to the event destination manager 33, the ID corresponding to the data-displaying window W2 is sent together. Thereby, the event destination manager 33 arranges the window order ID at the top of the event order table 34t of the event delivery order storage 34. And the ID of the data-displaying window W2 is arranged at the top of the window order table 341t of the window delivery order storage 341 composing the event delivery order storage 34 (FIG 10 (a)). It is not always necessary to arrange the window order ID at the top of the event order table 34t. Instead of moving the position of each ID of the event order table 34t, it may be configured that the ID of the data-displaying window is arranged at the top of the window order table 341t.

In the abovementioned conditions, when the EPG button of the remote controller 10 is pressed down, according to the process described in the first and second embodiments, the EPG task is activated, the information of the activation of the EPG task is given to the event destination manager 33 via task manager 400, and the ID of the EPG task T1 is arranged at the top of the event order table 34t (FIG.10 (b)). After the EPG task T1 starts the processing, the displaying means 200 displays the EPG window W1a including a time axis and a channel axis as shown in FIG.11 (b). The time axis and the channel axis as described above consists of divided fields that a user can select, for example, such a unit of each program and a unit of time table as the TV-radio programs in newspapers. The information about the preparation of the EPG window W1a is notified to the event destination manager 33 via the window manager 39, and the ID corresponding to the EPG window W1a is also sent to the event destination manager 33. At the same time, the window manager 39 keeps the information of the EPG window W1a (the task ID (the ID of the EPG task T1), the relative position (x, y, z) to the parent window, the width of the window, the height of the window, and etc.) under the control by itself.

According to the information about the preparation of the EPG window W1a, the window delivery order storage 341 arranges the ID corresponding to the data-displaying window W1a at the top of the widow order table 34 it. Under these conditions, the order of the window order table 341t of the window delivery order storage 341 is arranged, from the top, the ID corresponding to the EPG window, the ID corresponding to the data-displaying window... respectively. The order is corresponding to the displaying order that the displaying means displays from the foreground.

Next, the event delivery order storage 34, after receiving the preparation of the EPG window W1a via the window manager 39, arranges the window order ID at the top of the event order table 34t (FIG.10 (c)).

In this condition, when a user moves the pointer on the EPG window W1a shown in FIG.11 (b) to the point of the object channel and the object time by using arrow keys and then presses the enter key, the EPG window W1a accepts the event. That is to say, an event, which the user performs by operating an upward arrow key, a downward arrow key, a leftward arrow key, a rightward arrow key, and an enter key, is sent to the event delivery processor 32 first. The event delivery processor 32 on receipt of the event inquires of the event destination manager 33 the event destination. The event destination manager 33 obtains the event destination from the event delivery order storage 34. The event destination manager 33 notifies the event delivery processor 32 of the identifier corresponding to the EPG window as a destination, confirming that the EPG window ID positions at the top of the window delivery order table 341t, via the window order ID that is positioned at the top of the event delivery order table 34t in the event delivery order storage 34 shown in FIG.10 (c).

Accordingly the event delivery processor 32 can obtain the identifier of the EPG window. Since the identifier of the EPG window is a window ID, the event delivery processor 32 inquires of the window manager 39 the task that controls the window W1a of the window ID. The window manager on receipt of the inquiry sends back an identifier of the EPG task T1 based on the managing information to the event delivery processor 32.

After the event delivery processor 32 sends the event to the EPG task T1 as above, the EPG task T1 moves the pointer on the EPG window W1a. And at the same time, the event of the enter key is consumed by the EPG task T1, and then the EPG task T1 prepares a new window W1b. After this, the EPG task T1 request the event destination manager 33 to change the event delivery order of the window order table 341t and displays the prepared window W1b. The processing that each part performs when the new window W1b is the same as above.

As a result, the EPG full-information window W1b is displayed as shown in FIG.11 (c). At this time, the window delivery order storage 341 forms the window order table 341t which places at the top the identifier corresponding to the EPG full-information window W1b about the specific channel displayed at the foreground, at the second position the identifier corresponding to the EPG window W1a, and at the third position the identifier corresponding to the data-displaying window W2 (FIG.10 (d)).

The event delivery is performed in the arrangement order of the window delivery order storage 341 to which the priority order is given in the display order that the display means is displaying form the foreground. But the arrangement order may be set according to the other rules.

The other rules are that the event delivery order is controlled according to (1) the preparation order of the window, (2) the priority order given to a window, or (3) the activation order of a task preparing the window. Though the windows shown in the diagrams are illustrated overlaying over the other window (the EPG window is overlaid on the EPG full information window), it is not always necessary to overlay the windows.

In each embodiment described above, the remote controller receiver 20 is included in the TV unit as a circuit, and event delivery means 300 (the event interpreter 31, the event delivery processor 32, event destination manager 33, and the window manager 39) and the task manager is configured by a program and a CPU included in the memory. The event delivery order storage 34 (the event order table 34t and the window order table 341t) is stored in a memory such as ROM or RAM. Each queue corresponding to respective task, which is the event receiver 41, should be allocated in a specific field of a memory such as RAM.

As discussed above, since the present invention can perform uniformly the processing of delivering an event to a task (application) activated by a direct button of the remote controller and the processing of delivering an event to a window, it is possible to facilitate the event control by the application.

In addition, it is possible to determine automatically what task the event input is corresponding to; the event input is the operation that the user presses a button of the remote controller, for example. Therefore, since a user does not need to adjust the pointer to a specific position, it is possible to improve the operation efficiency.

## Claims

1. An event delivery control system comprising:
an event delivery order storage for storing at least one task ID specifying a task and at least one window ID specifying a window on an equality with each other (the task ID or the window ID is called an event delivery ID);
an event delivery processor, when an event is generated, for requesting an event delivery ID of the event destination, and delivering the event to a task corresponding to the obtained event delivery ID; and
an event destination manager for receiving an event delivery ID one after another from the event delivery order storage in response to the request for the event delivery ID and sending the received event delivery ID to the event delivery processor.

2. An event delivery control system according to Claim 1, which further comprises:
a window manager for storing at least one window ID and at least one task ID of a task preparing a window specified by the window ID in connection with each other, and in response to the inquiry about the window ID from the event delivery processor, sending back the corresponding task ID.

3. An event delivery control system according to Claim 2, wherein the event destination manager includes a function of the window manager.

4. An event delivery control system according to Claim 3, which comprise:
a window delivery order storage for storing event delivery orders in the arrangement order of window identifiers; and
the event destination manager capable of referring to window identifiers in the window delivery order storage corresponding to a window delivery order identifier stored in the event delivery order storage instead of the prescribed window identifiers.

5. An event delivery control system according to Claim 4, wherein the window delivery order storage arranges the event delivery orders according to the position of window.

6. An event delivery control system according to Claim 4, wherein the window delivery order storage arranges the event delivery orders according to the preparation order of window.

7. An event delivery control system according to Claim 4, wherein the window delivery order storage arranges the event delivery orders according to the priority order of window.

8. An event delivery control system according to Claim 4, wherein the window delivery order storage arranges the event delivery orders according to the activation order of task preparing a window.

9. An event delivery control system according to either one of Claim 5 to Claim 8, wherein the ID order of the window delivery order storage can be changed dynamically.

10. An event delivery control system according to Claim 1, wherein an event receiver on a task side has a function of returning to the event delivery processor the received event together with information relating to the state of the event consumption, and the event delivery processor performs the processing corresponding to the contents of the information.

11. An event delivery control system according to Claim 10, wherein the information relating to the state of the event consumption is either one of the "consumption" that the event was consumed, the "non-consumption" that the event was not consumed, or the "consumption and continuation" that the event was consumed but the delivery is continued, and the event delivery processor executes a request for a event delivery ID of the next event destination in case of receiving the "non-consumption" or the "consumption and continuation".

12. An event delivery control method comprising:
a step of storing at least one task ID specifying a task and/or at least one window ID specifying a window on an equality with each other (the task ID or the window ID is called an event delivery ID);
a step of obtaining an event delivery ID of the event destination when an event is generated, from the stored event delivery ID; and
a step of delivering the event to a task corresponding to the obtained event delivery ID.

13. A recording medium for recording the following processing as computer programs:
a step of storing at least one task ID specifying a task and/or at least one window ID specifying a window on an equality with each other (the task ID or the window ID is called an event delivery ID);
a step of obtaining an event delivery ID of the event destination, when an event is generated, from the registered event delivery ID; and
a step of delivering the event to a task corresponding to the obtained event delivery ID.
